# EUROPÄISCHE PATENTSCHRIFT

(11) **EP 2 205 427 B1**
(45) Veröffentlichungstag und Bekanntmachung des Hinweises auf die Patenterteilung: **19.03.2014**
(21) Anmeldenummer: 08842811.5
(22) Anmeldetag: 22.10.2008
(51) Int. Cl.: B29C 53/08, F24J 3/08

(54) **VERFAHREN UND VORRICHTUNG ZUM VERFORMEN VON ROHREN**
METHOD AND APPARATUS FOR DEFORMING TUBES
PROCÉDÉ ET APPAREIL POUR DÉFORMER DES TUBES

(30) Priorität: 26.10.2007 DE 102007051674
(43) Veröffentlichungstag der Anmeldung: 14.07.2010
(73) Patentinhaber: Rehau AG + Co, 95111 Rehau (DE)
(72) Erfinder: LIEBEL, Volker, 91058 Erlangen (DE); HEINLOTH, Ludwig, 91154 Roth (DE); PROBST, Egon, 94262 Kollnburg (DE)
(86) Internationale Anmeldenummer: PCT/EP2008/008909
(87) Internationale Veröffentlichungsnummer: WO 2009/053033

(56) Entgegenhaltungen:
- CH-A5- 674 669
- DE-A1- 3 147 328
- DE-U1- 9 103 368
- DE-U1- 20 202 578
- US-A- 3 753 635

## Beschreibung

Die Erfindung betrifft ein Verfahren zum Verformen von Rohren und eine Vorrichtung zur Durchführung des Verfahrens.

Rohre, insbesondere solche aus polymeren Materialien, neigen beim Biegen auf kleine Biegeradien zur Ovalisierung, wodurch der freie Querschnitt verringert wird, und schließlich zum Knicken.
Rohre aus Polyethylen mit dem Durchmesser:Wanddicken-Verhältnis von beispielsweise 11:1 lassen sich in der Regel nur auf einen Radius biegen, der dem 8-fachen Durchmesser entspricht. Mit felgenförmigen Rohrführungsbögen sind Radien bis zu 5-fachem Durchmesser möglich.

In vielen Anwendungsfällen sind jedoch wesentlich kleinere Biegeradien erforderlich. Wenn der Biegebereich von einem Rohrende aus leicht erreichbar ist, kann der innere Querschnitt beispielsweise mittels eines eingeschobenen flexiblen Stützrohres oder -stabes oder einer Spiralfeder gestützt werden.

In anderen Anwendungsfällen, insbesondere bei der Herstellung von Erdwärmesonden, ist der Biegebereich jedoch so weit von den Rohrenden entfernt, dass dieses Verfahren in der Praxis kaum umsetzbar ist.

Meistverbreitet sind deshalb mehrstückige U-förmige Erdwärmesonden aus z.B. Polyethylen, die aus zwei annähernd parallelen Rohren bestehen, die an ihrem unteren Ende mittels beispielsweise angeschweißter Formteile wie in der EP 2 084 465 dargestellt miteinander verbunden sind.

Weiterhin sind einstückige U-förmige Erdwärmesonden aus unvernetzten und vernetzten Polymeren bekannt, bei denen auf eine Rohrverbindung verzichtet wird, indem der Vorlauf und Rücklauf über ein gebogenes Rohrstück wie in der DE 202 02 578 U1 dargestellt verbunden ist.

Aus der Druckschrift DE 20202578 U1 ist bekannt, Erdsondenrohre derart zu biegen, dass ein Kopf entsteht, der besonders widerstandsfähig ist.

Die Druckschrift DE 3147328 offenbart eine Vorrichtung zur Herstellung eines Rohrbogens, der in einem Arbeitsgang hergestellt werden kann.
Aus der Druckschrift DE 9103368 geht eine Vorrichtung zum Biegen von Rohren hervor, die an verschiedene Rohrprofile anpassbar ist.
Weiter lehrt die Druckschrift CH 674669 ein Verfahren und eine Einrichtung zum Erzeugen von Rohrbogen, das auch kleine Biegeradien zulässt.
Schließlich ist aus der Druckschrift US 3753635 eine Vorrichtung zum präzisen Biegen von Kunststoffrohren offenkundig, das insbesondere eine hohe Qualität der Biegungen ermöglicht.

Nachteilig bei den erstgenannten Erdwärmesonden ist die Verbindungsstelle tief im Boden. Eine optimal hergestellte Rohrverbindung nach dem Stand der Technik ist zwar so haltbar wie das sich daran anschließende Rohr, in der Praxis stellt eine Rohrverbindung jedoch aufgrund immer möglicher Fertigungsmängel eine potentielle Schadensstelle dar.

Die letztgenannten Erdwärmesonden stellen dahingehend einen deutlichen Fortschritt dar; der in der Vergangenheit angewandte einfache Herstellprozess - Erwärmen und Biegen um eine Felge - führte jedoch zu hohen Ausschussquoten.

Aufgabe der vorliegenden Erfindung ist es daher, ein Verfahren und eine Vorrichtung anzugeben, mit dem das Verformen von Rohren, vorzugsweise Biegen, insbesondere das Biegen von Erdwärmesonden, auf kleine Biegeradien möglich ist, ohne dass es zu Ovalisierungen bzw. zum Knicken kommt. Eine weitere Aufgabe ist es, ein Verfahren anzugeben, mit dem Rohre mit einem Biegebereich herzustellen sind, welcher eine maximale Festigkeit, Stabilität und Robustheit aufweist. Das Verfahren soll einfach, prozesssicher, leicht durchführbar, schnell und reproduzierbar ablaufen.

Die Lösung der Aufgabe erfolgt in Form des erfindungsgemäßen Verfahrens gemäß Anspruch 1 und der erfindungsgemäßen Vorrichtung gemäß Anspruch 13. Das Verfahren ermöglicht nun unter anderem eine prozesssichere Herstellung von einstückigen Erdwärmesonden insbesondere aus vernetztem Polyethylen und weist wenigstens die nachfolgend aufgeführten Arbeitsschritte auf:
1. Erwärmen des Rohres im Biegebereich
2. Biegen des erwärmten Biegebereichs um den konvexen Teil eines Biegeformabschnitts
3. Schließen der Biegeform mit einem Biegeformabschnitt, der eine konkave Gegenkontur aufweist
4. Aufbringen eines Überdruckes im Rohrlumen
5. Abkühlen des gebogenen Rohres
6. Öffnen der Biegeform und Entnahme des gebogenen Rohres.

Das Verfahren findet Anwendung zur Verformen von Rohren, insbesondere zum Herstellen von Rohrbiegungen mit einem Biegeradius, der maximal dem doppelten Rohraußendurchmesser entspricht.

Es ist vorteilhaft, wenn das Rohr im Biegebereich auf eine Temperatur von 125 bis 150 °C, insbesondere 130 bis 140 °C, erwärmt wird.

Die Biegeform ist vorteilhafterweise so gestaltet, dass das Rohr in einem beliebigen Winkel gebogen werden kann, bevorzugt ist ein Winkel von 175° bis 190°, besonders bevorzugt ein Winkel von 178° bis 185°.

Vorteilhaft ist das Vorwärmen der Biegeform auf etwa 60 bis 80 °C, um eine prozesssichere faltenfreie Fertigung zu ermöglichen.

Vorteilhaft ist das Aufbringen des Überdruckes gleichzeitig von beiden Rohrenden ausgehend, so dass im Biegebereich praktisch keine Luftströmung auftritt, die das Rohr im Biegebereich vor dem vollständigen Ausformen abkühlt.
Der Überdruck beträgt dabei mindestens 3 bar, bevorzugt 7 bis 9 bar.

Der Überdruck im Rohr wird so weit erhöht, dass der Biegeabschnitt allseitig an der Biegeform anliegt.

Die Biegeform ist dabei so gestaltet, dass ihre Innenkontur der Außenkontur des herzustellenden Rohrbogens entspricht

In einer Weiterbildung der vorliegenden Erfindung ist es möglich, vor dem Biegevorgang einen Vordruck, bevorzugt einen solchen von 0,05 bis 0,5 bar, im Rohr aufzubauen.

In einer vorteilhaften erfindungsgemäßen Verfahrensvariante erfolgt das Biegen um den konvexen Teil der 180°-Form bei gleichzeitigem Aufbringen einer Zugkraft auf die an den Biegebereich anschließenden Rohre. Dadurch wird das Rohr im Biegebereich ein wenig gestreckt.

Die Biegeformabschnitte weisen vorteithafter Weise eine felgenförmige Form auf, Diese stützt beim Biegen insbesondere die seitliche Randzone des zu biegenden Rohres und verhindert ein "Ausweichen", das zur Ovalisierung bzw. zum Knicken führt.

Der Biegeabschnitt des Rohres wird zum Biegen in eine Biegeform eingelegt, deren Innenkontur der Außenkontur des herzustellenden Rohrbogens entspricht

In einer nochmals verbesserten erfindungsgemäßen Verfahrensvariante werden die Rohre nach dem Schließen der Biegeform und Aufbringen des Innendruckes in die Biegeform gestaucht.

In einer weiteren Ausführungsform der Erfindung wird die Ausformung der Biegung dadurch unterstützt, dass in der Biegeform ein Unterdruck hergestellt wird.

Das anschließende Abkühlen des gebogenen Rohres kann durch eine Fluidströmung im Rohr unterstützt werden.

Weiterhin kann auch durch eine Kühlung des Biegewerkzeuges die Zykluszeit verkürzt werden.

In einer weiteren vorteilhaften erfindungsgemäßen Verfahrensvariante wird der Biegebereich nach dem Biegen des Rohres in weiteren Verfahrensschritten mit einem Gewebeband, bevorzugt einem Glasgewebeband umwickelt. Zusätzlich kann das Gewebeband mit Harz getränkt und dieses Harz anschließend ausgehärtet werden.

Damit wird die mechanische Festigkeit und Robustheit des Sondenfußes weiter erhöht. Dabei besteht auch die Möglichkeit, Befestigungselemente einzulaminieren, um Erdwärmesonden miteinander oder mit Gewichten, die als Einbringhilfe in das Bohrloch dienen, verbinden zu können.

Alternativ oder zusätzlich zum Umwickeln mit einem Gewebeband sieht die Erfindung auch die Möglichkeit der Verstärkung der Rohre mit Metallhülsen vor.

In Kombination mit vorgenannten Verfahrensschritten umfasst die Lehre der Erfindung weiterhin, den Sondenfuß in einem Formwerkzeug mit einem Polymer zu umspritzen oder zu umgießen.

Als vorteilhafte erfindungsgemäße Verfahrenschritte gelten dabei insbesondere:
- Umspritzen mit - auch geschäumten - Thermoplasten in einer geschlossenen Form
- Umspritzen mit faserverstärkten - auch geschäumten - Thermoplasten in einer geschlossenen Form
- Umspritzen mit Duromeren in einer geschlossenen Form
- Umspritzen mit faserverstärkten Duromeren in einer geschlossenen Form
- Ausgießen mit - auch faserverstärkten - Duromeren in einer offenen Gießform

Alle vorgenannten Verfahrensschritte ermöglichen dabei ebenfalls das Einbringen oder Integrieren von Befestigungselementen.

Als besonders vorteilhafte Gießformen haben sich dabei solche aus einem Elastomer, wie zum Beispiel Silikonkautschuk oder aus beispielsweise mit Teflon antihaftbeschichtetem Metall erwiesen.
Besonders vorteilhaft kann es sein, die Gießform als verlorene Form, beispielsweise als Spritzgussteil oder Blasteil, auszubilden.

Und schließlich sieht die Lehre der Erfindung noch vor, vorgenannte Verfahrensschritte damit zu kombinieren, dass der Sondenfuß mit vorgefertigten Abdeckelementen weitgehend formschlüssig umfasst wird.
Vorzugsweise werden diese Abdeckelemente ganz oder teilweise aus Thermoplasten, Duromeren oder Metallen hergestellt. Die Verbindung der Abdeckelemente kann durch Schrauben, Schweißen, Kleben oder andere Fügeverfahren geschehen. Abdeckelemente, die ganz oder teilweise aus Metallen hergestellt sind, können bei entsprechend großer Ausführung gleichzeitig als Gewicht dienen, um die Erdwärmesonde leichter in das meist wassergefüllte Bohrloch einführen zu können.

Die die Erfindung verdeutlichenden Figuren zeigen folgendes:
- Fig. 1: zeigt in einer Schnittdarstellung das zu biegende Rohr und die Biegeformabschnitte;
- Fig. 2: zeigt in einer Schnittdarstellung das gebogene Rohr in der Biegeform;
- Fig. 3: zeigt in einer perspektivischen Ansicht das gebogene Rohr;
- Fig. 4: zeigt in einer perspektivischen Ansicht das gebogene Rohr

### Die Figuren zeigen im Detail:

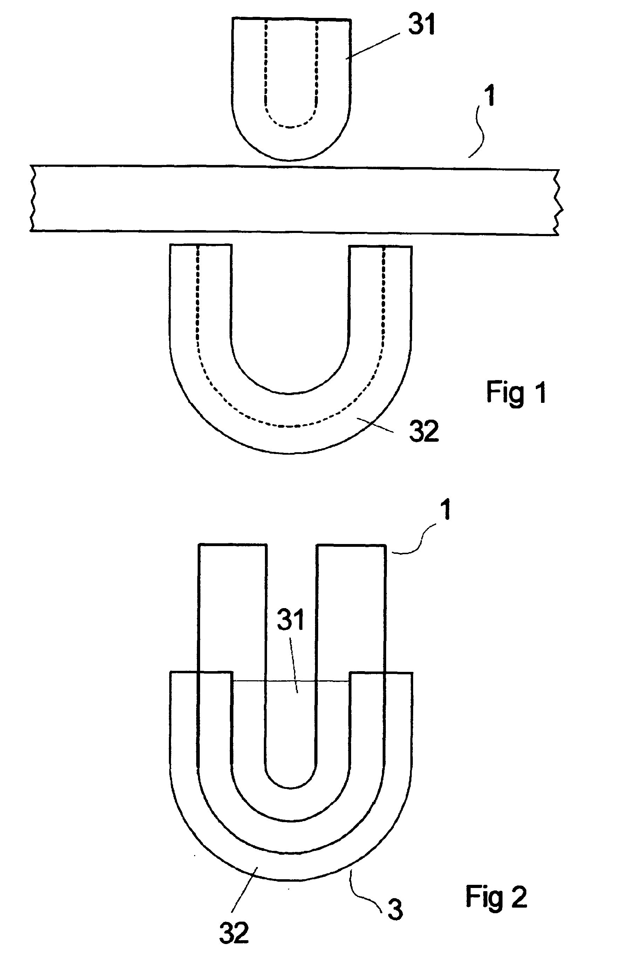

In Fig. 1 ist ein Rohr (1) dargestellt, welches mit den Biegeformabschnitten (31) und (32) gebogen werden soll.

In Fig. 2 ist eine efindungsgemäße Erdwärmesonde dargestellt, an der bereits folgende Arbeitsschritte durchgeführt wurden:
- Dreieinhalbminütiges Erwärmen des Rohres (1) im Biegebereich mittels einer auf 140 °C temperierten Kontaktheizung
- Biegen um den konvexen Teil eines auf 70 °C vorgewärmten 180°-Biegeformabschnittes (31), dabei Strecken des Rohres (1) im Biegebereich um 5 %
- Schließen der Biegeform (3) mit einer konkaven, ebenfalls auf 70 °C vorgewärmten Biegeformabschnitt (32) (Gegenform)
- Erhöhen des Innendruckes auf 7,5 bar gleichmäßig über beide Rohrenden
- Stauchen des Rohres (1) in die Biegeform (3)
- Abkühlen des gebogenen Rohres (1).

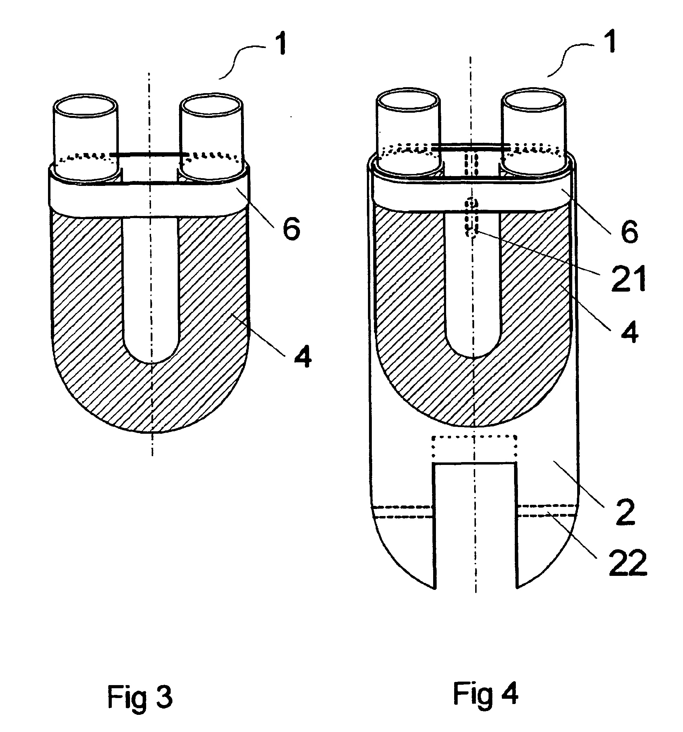

In Fig. 3 ist eine Erdwärmesonde dargestellt, bei der das gebogene Rohr (1) in einem zusätzlichen Verfahrensschritt mit einem Glasgewebeband (4) umwickelt ist, wobei zusätzlich ein Metallband (6) den Biegebereich stabilisiert.

In Fig. 4 ist eine Erdwärmesonde gemäß Fig. 3 dargestellt, welche zusätzlich ein angegossenes Formteil (2) aufweist. Im Formteil (2) sind Öffnungen (21, 22) vorgesehen, die zur Verbindung von zwei Erdwärmesonden oder dem Anbringen von Gewichten genutzt werden können.

### Vorrichtung

Die Lösung der Aufgabe, eine Vorrichtung zur Durchführung des Verfahrens anzugeben, erfolgt in Anspruch 14.
Erfindungsgemäß besteht die Vorrichtung aus mindestens zwei Biegeformabschnitten zum Biegen des Rohres, Mittel, um den Biegeabschnitt des Rohres und die Biegeformabschnitte zu erwärmen, Mittel, um im Rohrlumen einen Druck aufzubauen und Mittel, die Biegeform zu schließen.
In einer Weiterbildung der Erfindung können auch Mittel vorhanden sein, auf das Rohr eine Zugkraft aufzubringen. In einer weiteren Weiterbildung der Erfindung können auch Mittel vorgesehen sein, das Rohr in die Biegeform zu stauchen.

### Verwendung

Das erfindungsgemäße Verfahren zum Verformen von Rohren findet vorzugsweise Anwendung bei der Herstellung von Erdwärmesonden, die bei der Nutzung der Erdwärme zum Einsatz kommen.
Es liegt in der Natur der Sache, dass das Verfahren auch bei Systemen, bei welchen gebogene Rohre Verwendung finden, eingesetzt werden kann.
Anwendungen im Heizungssystemen, Wasserver- und -entsorgungssystemen, Gasversorgungssystemen und dergleichen mehr sind möglich.

### Die vorliegende Erfindung umfasst die folgenden Ausführungsbeispiele:

Die Erfindung betrifft ein Verfahren zum Verformen von Rohren 1, insbesondere zum Herstellen von Rohrbiegungen mit einem Biegeradius, der maximal dem doppelten Rohraußendurchmesser entspricht, gekennzeichnet durch folgende Verfahrensschritte:
- Erwärmen des Rohres im Biegebereich
- Biegen um den konvexen Teil eines Biegeformabschnittes 31
- Schließen der Biegeform 3 mit einem Biegeformabschnitt 32, der eine konkave Gegenkontur aufweist
- Aufbringen eines Überdruckes im Rohrlumen
- Abkühlen des gebogenen Rohres 1
- Öffnen der Biegeform 3 und Entnahme des gebogenen Rohres 1.

Es kann sich als hilfreich erweisen, wenn das Rohr 1 im Biegebereich auf eine Temperatur von 125 bis 150 °C, insbesondere 130 bis 140 °C, erwärmt wird.

Es kann sich als nützlich erweisen, wenn das Rohr 1 in einem beliebigen Winkel gebogen wird, bevorzugt in einem Winkel von 175° bis 190°, besonders bevorzugt in einem Winkel von 178° bis 185°.

Es kann sich als praktisch erweisen, wenn die Biegeformabschnitte 31, 32 auf etwa 60 bis 80 °C erwärmt werden.

Es kann sich als günstig erweisen, wenn während des Erwärmens im Rohr 1 ein Überdruck hergestellt wird.

Es kann vorteilhaft sein, wenn das Rohr 1 im Bereich des Biegeabschnittes beim Biegen gestreckt wird.

Es kann nützlich sein, wenn der Biegeabschnitt des Rohres 1 zum Biegen in eine Biegeform 3 eingelegt wird, deren Innenkontur der Außenkontur des herzustellenden Rohrbogens entspricht.

Es kann aber auch nützlich sein, wenn der Biegeabschnitt des Rohres 1 zum Biegen in eine felgenförmige Biegeform eingelegt wird.

Es kann praktisch sein, wenn die Biegeform 3 mehrteilig, bevorzugt zweiteilig, ausgeführt ist.

Es kann hilfreich sein, wenn das Rohr 1 in einer Biegeform 3 aus einem felgenförmigen, konvexen Biegformabschnitt 31 und einen die Biegeform 3 schließenden zweiten, konkaven Biegeformabschnitt 32 gebogen wird.

Es kann vorteithaft sein, wenn der Überdruck im Rohr 1 nach Einlegen in die Biegeform 3 so weit erhöht wird, dass der Biegeabschnitt allseitig an der Biegeform 3 anliegt.

Es kann sich als hilfreich erweisen, wenn der Überdruck gleichzeitig von beiden Rohrenden aufgebracht wird.

Es kann sich als hilfreich erweisen, wenn ein Überdruck von mindestens 3, bevorzugt 7 bis 9 bar, aufgebracht wird.

Es kann sich als günstig erweisen, wenn der Biegeabschnitt nach Aufbringen des Überdruckes in die Biegeform 3 gestaucht wird.

Es kann praktisch sein, wenn das Rohr 1 im Bereich des Biegeabschnittes nach dem Biegen mit einem Gewebeband 4 umwickelt wird.

Es kann von Vorteil sein, wenn das Gewebeband 4 mit aushärtendem Harz getränkt wird.

Es kann aber auch von Nutzen sein, wenn das Rohr 1 im Bereich des Biegeabschnitts mit Metallhülsen 6 verstärkt wird.

Es kann ebenfalls von Nutzen sein, wenn der Biegeabschnitt mit einem Polymer umgossen oder umspritzt wird.

Dabei kann es sich als vorteilhaft erweisen, wenn der Biegeabschnitt mit einem Thermoplastmaterial im Spritzgussverfahren umspritzt wird.

Es kann sich auch als vorteilhaft erweisen, wenn der Biegeabschnitt im Reaktionsgießverfahren umgossen wird.

Es kann sich ebenso als vorteilhaft erweisen, wenn der Biegeabschnitt mit einem Duromer umschlossen wird.

Es kann sich aber auch als vorteilhaft erweisen, wenn der Biegeabschnitt mit einem Duromer umgossen wird.

Es kann besonders vorteilhaft sein, wenn die Spritzguss- oder Gießform als verlorene Form eingesetzt wird.

Es kann vorteilhaft sein, wenn Befestigungselemente und/oder Durchbrüche 21, 22 in die Umwicklung, Verstärkung, Umspritzung oder Umgießung integriert werden.

Es kann hilfreich sein, wenn der Biegeabschnitt mit mindestens einem vorgefertigten Abdeckelement wenigstens annähernd formschlüssig eingefasst wird.

Es kann zudem hilfreich sein, wenn Abdeckelemente mittels mechanischer Verbindungselemente miteinander verbunden werden.

Es kann auch von Vorteil sein, wenn Abdeckelemente mittels Kleben, Schweißen, Schrauben und dergleichen miteinander verbunden werden.

Die Erfindung betrifft ebenfalls eine Vorrichtung zur Durchführung des Verfahrens nach dem vorangegangenen Ausführungsbeispiel, bestehend aus mindestens zwei Biegeformabschnitten 31, 32 zum Biegen des Rohres 1, Mittel, um den Biegeabschnitt des Rohres 1 und die Biegeformabschnitte 31, 32 zu erwärmen, Mittel, um im Rohrlumen einen Druck aufzubauen und Mittel, die Biegeform 3 zu schließen.

Die Vorrichtung kann ein Mittel umfassen, um auf das Rohr 1 eine Zugkraft aufzubringen.

Die Vorrichtung kann aber auch ein Mittel umfassen, um das Rohr 1 in die Biegeform 3 zu stauchen.

## Patentansprüche

1. Verfahren zum Verformen von Rohren (1) zur Herstellung von einstückigen Erdwärmesonden, wobei das Rohr mit einem Biegeradius, der maximal dem doppelten Rohraußendurchmesser entspricht, in einem Winkel von 175° bis 190° gebogen wird, umfassend die folgenden Verfahrensschritte:
- Erwärmen des Rohres im Biegebereich und Aufbringen eines Vordrucks im Rohr vor dem Biegevorgang
- Biegen um den konvexen Teil eines Biegeformabschnittes (31)
- Schließen der Biegeform (3) mit einem Biegeformabschnitt (32), der eine konkave Gegenkontur aufweist
- Aufbringen eines Überdruckes im Rohrlumen
- Abkühlen des gebogenen Rohres (1)
- Öffnen der Biegeform (3) und Entnahme des gebogenen Rohres (1).

2. Verfahren nach Anspruch 1, **dadurch gekennzeichnet, dass** das Rohr (1) im Biegebereich auf eine Temperatur von 125 bis 150 °C, insbesondere 130 bis 140 °C, erwärmt wird.

3. Verfahren nach Anspruch 1 oder 2, **dadurch gekennzeichnet, dass** das Rohr (1) in einer Biegeform (3) aus einem felgenförmigen, konvexen Biegformabschnitt (31) und einen die Biegeform (3) schließenden zweiten, konkaven Biegeformabschnitt (32) gebogen wird.

4. Verfahren nach einem der Ansprüche 1 bis 3, **dadurch gekennzeichnet, dass** der Überdruck im Rohr (1) nach Einlegen in die Biegeform (3) so weit erhöht wird, dass der Biegeabschnitt allseitig an der Biegeform (3) anliegt.

5. Verfahren nach einem der vorangehenden Ansprüche, **dadurch gekennzeichnet, dass** der Überdruck gleichzeitig von beiden Rohrenden aufgebracht wird.

6. Verfahren nach einem der vorangehenden Ansprüche, **dadurch gekennzeichnet, dass** ein Überdruck von mindestens 3, bevorzugt 7 bis 9 bar, aufgebracht wird.

7. Verfahren nach einem der vorgenannten Ansprüche, **dadurch gekennzeichnet, dass** das Rohr (1) im Bereich des Biegeabschnittes nach dem Biegen mit einem Gewebeband (4) umwickelt wird.

8. Verfahren nach Anspruch 7, **dadurch gekennzeichnet, dass** das Gewebeband (4) mit aushärtendem Harz getränkt wird.

9. Verfahren nach einem der vorgenannten Ansprüche, **dadurch gekennzeichnet, dass** das Rohr (1) im Bereich des Biegeabschnitts mit Metallhülsen (6) verstärkt wird.

10. Verfahren nach einem der vorgenannten Ansprüche, **dadurch gekennzeichnet, dass** der Biegeabschnitt mit einem Polymer umgossen oder umspritzt wird.

11. Verfahren nach Anspruch 10, **dadurch gekennzeichnet, dass** die Spritzguss- oder Gießform als verlorene Form eingesetzt wird.

12. Verfahren nach einem der vorgenannten Ansprüche, **dadurch gekennzeichnet, dass** der Biegeabschnitt mit mindestens einem vorgefertigten Abdeckelement wenigstens annähernd formschlüssig eingefasst wird.

13. Vorrichtung zur Durchführung des Verfahrens nach einem der Ansprüche 1 bis 12, bestehend aus mindestens zwei Biegeformabschnitten (31, 32) zum Biegen des Rohres (1), Mittel, um den Biegeabschnitt des Rohres (1) und die Biegeformabschnitte (31, 32) zu erwärmen, Mittel, um im Rohrlumen einen Druck aufzubauen und Mittel, die Biegeform (3) zu schließen.

## Claims

1. Method for deforming tubes (1) for producing single-piece geothermal probes,
wherein the tube having a bending radius which corresponds at maximum to twice the outside diameter of the tube is bent at an angle of 175° to 190°, comprising the following method steps:
- heating the tube in the bending region and applying a preliminary pressure in the tube before the bending operation
- bending around the convex part of a bending mould section (31)
- closing the bending mould (3) with a bending mould section (32) which has a concave counter contour
- applying a positive pressure in the tube lumen
- cooling the bent tube (1)
- opening the bending mould (3) and removing the bent tube (1).

2. Method according to Claim 1, **characterized in that** the tube (1) is heated in the bending region to a temperature of 125 to 150°C, in particular 130 to 140°C.

3. Method according to Claim 1 or 2, **characterized in that** the tube (1) is bent in a bending mould (3) consisting of a rim-shaped, convex bending mould section (31) and a second, concave bending mould section (32) closing the bending mould (3).

4. Method according to one of Claims 1 to 3, **characterized in that** the positive pressure in the tube (1) after the latter is placed into the bending mould (3) is increased to such an extent that the bending section bears against the bending mould (3) on all sides.

5. Method according to one of the preceding claims, **characterized in that** the positive pressure is applied simultaneously from both ends of the tube.

6. Method according to one of the preceding claims, **characterized in that** a positive pressure of at least 3, preferably 7 to 9 bar, is applied.

7. Method according to one of the preceding claims, **characterized in that** the tube (1) is wrapped in the region of the bending section with a fabric tape (4) after the bending.

8. Method according to Claim 7, **characterized in that** the fabric tape (4) is impregnated with curing resin.

9. Method according to one of the preceding claims, **characterized in that** the tube (1) is reinforced in the region of the bending section with metal sleeves (6).

10. Method according to one of the preceding claims, **characterized in that** the bending section is potted or insert-moulded with a polymer.

11. Method according to Claim 10, **characterized in that** the injection mould or casting mould is used as an expendable mould.

12. Method according to one of the preceding claims, **characterized in that** the bending section is at least approximately enclosed in a form-fitting manner by means of at least one premanufactured covering element.

13. Apparatus for carrying out the method according to one of Claims 1 to 12, consisting of at least two bending mould sections (31, 32), for bending the tube (1), means for heating the bending section of the tube (1) and the bending mould sections (31, 32), means for building up a pressure in the tube lumen, and means for closing the bending mould (3).

## Revendications

1. Procédé pour déformer des tubes (1) destinés à la fabrication de sondes géothermiques en une seule pièce, dans lequel on cintre le tube avec un rayon de courbure, qui correspond au maximum au double du diamètre extérieur du tube, à un angle de 175° à 190°, comprenant les étapes suivantes:
- chauffage du tube dans la zone de cintrage et application d'une pression initiale dans le tube avant l'opération de cintrage;
- cintrage autour de la partie convexe d'une partie de moule de cintrage (31);
- fermeture du moule de cintrage (3) avec une partie de moule de cintrage (32), qui présente un contour opposé concave;
- application d'une surpression dans la lumière du tube;
- refroidissement du tube cintré (1);
- ouverture du moule de cintrage (3) et enlèvement du tube cintré (1).

2. Procédé selon la revendication 1, **caractérisé en ce que** l'on chauffe le tube (1) dans la zone de cintrage à une température de 125 à 150°C, en particulier de 130 à 140°C.

3. Procédé selon la revendication 1 ou 2, **caractérisé en ce que** l'on cintre le tube (1) dans un moule de cintrage (3) composé d'une partie de moule de cintrage convexe en forme de jante (31) et d'une deuxième partie de moule de cintrage concave (32), fermant le moule de cintrage (3).

4. Procédé selon l'une quelconque des revendications 1 à 3, **caractérisé en ce que** l'on augmente la surpression dans le tube (1), après l'introduction dans le moule de cintrage (3), jusqu'à ce que la zone de cintrage s'applique de tous les côtés sur le moule de cintrage (3).

5. Procédé selon l'une quelconque des revendications précédentes, **caractérisé en ce que** l'on applique la surpression simultanément par les deux extrémités du tube.

6. Procédé selon l'une quelconque des revendications précédentes, **caractérisé en ce que** l'on applique une surpression d'au moins 3, de préférence de 7 à 9 bar.

7. Procédé selon l'une quelconque des revendications précédentes, **caractérisé en ce que** l'on entoure le tube (1) avec une bande de tissu (4) dans la région de la zone de cintrage après le cintrage.

8. Procédé selon la revendication 7, **caractérisé en ce que** l'on imprègne la bande de tissu (4) avec une résine durcissante.

9. Procédé selon l'une quelconque des revendications précédentes, **caractérisé en ce que** l'on renforce le tube (1) avec des manchons métalliques (6) dans la région de la zone de cintrage.

10. Procédé selon l'une quelconque des revendications précédentes, **caractérisé en ce que** l'on coule ou l'on projette un polymère autour de la zone de cintrage.

11. Procédé selon la revendication 10, **caractérisé en ce que** l'on utilise le moule de coulée par injection ou le moule de coulée comme moule perdu.

12. Procédé selon l'une quelconque des revendications précédentes, **caractérisé en ce que** l'on enveloppe au moins approximativement par emboîtement la zone de cintrage avec au moins un élément de recouvrement préfabriqué.

13. Dispositif pour la mise en oeuvre du procédé selon l'une quelconque des revendications 1 à 12, composé d'au moins deux parties de moule de cintrage (31, 32) pour le cintrage du tube (1), de moyens pour chauffer la zone de cintrage du tube (1) et les parties de moule de cintrage (31, 32), de moyens pour produire une pression dans la lumière du tube et de moyens pour fermer le moule de cintrage (3).
